# EUROPEAN PATENT APPLICATION

(11) **EP 2 581 711 A2**
(43) Date of publication of application: **17.04.2013**
(21) Application number: 12187972.0
(22) Date of filing: 10.10.2012
(51) Int. Cl.: G01D 5/245

(54) **Absolute position measuring device and method**

(30) Priority: 10.10.2011 US 201161545299 P
(71) Applicant: Advanced Sensor Technology Limited, 2 Ice House Street Central, Hong Kong (CN)
(72) Inventor: Meyer, Hans Ulrich, 1110 VD 1110 Morges (CH)
(74) Representative: Ward, David Ian

(57) **Abstract**

Two similar incremental sensors, one with 2N+1 spatial periods or pitches over a range of 2R, or N+0.5 pitches over a range of R, and the other with 2N-1 pitches over the range of 2R, or N-0.5 pitches over a range of R, measure a common position along an axis x. Both sensors consist of a scale (11, 12) whose spatially periodic features define the above pitches, and a reading head (21, 22). An exact absolute position over the maximum range of 2R can be computed from both sensors' outputs with a resolution about twice that of one sensor. For a reduced absolute range of less than R, computing the correct absolute position becomes simpler and more tolerant of sensor linearity. A preferred embodiment is a compact and linear absolute gauge combining two inductive incremental sensors, designed to replace current analog LVDT or half-bridge inductive gages.

## Description

### FIELD OF THE INVENTION

This invention relates to an absolute position measuring device or method for measuring a position along a linear or curvilinear axis using first and second incremental position sensors of slightly different spatial period or pitch.

### BACKGROUND OF THE INVENTION

An incremental position sensor operates by sensing a spatially periodic pattern, for example on a scale or a track. Its measured position can be offset by any integer number of spatial periods or pitches, as it is unambiguous or absolute only within a range of one such spatial period or pitch. However, by measuring the same position with two incremental sensors of slightly different pitch, the absolute position may be determined over a plurality of pitches.

US 4,420,754 to Andermo discloses a combination of two incremental sensors having 100 and 101 pitches (N and N+1) over an absolute range of 300 mm. As explained later, such a small pitch mismatch of 1% implies that each sensor's accuracy has to be better than 0.25% of its pitch to ensure an error-free measurement.

US 4,786,891 to Ueda et al. discloses a method for sensors having a slightly different integer number of pitches over the absolute position range: the exact absolute position in the case of first and second sensors having N and N+1 pitches, expressed in first sensor pitches, is the position having the first sensor's fractional pitch position which is closest to an approximate absolute position given by the difference of both incremental sensors' fractional pitch positions multiplied by N.

US 6,466,889 to Schödlbauer discloses a very similar method for finding the absolute position with sensors having N and N-1 pitches over the absolute range (in this case a shaft angle is measured by two rotary sensors geared to that shaft).

In both disclosures, the exact position is taken from the one sensor with N pitches over the range. The other sensor is only used to help find the approximate absolute position, obtained by multiplying the fractional part of both sensors' pitch difference by N. This simplifies computing ifN is adequately chosen, but the exact position's resolution and accuracy are from one sensor only.

US 7,637,020 to Maier et al. discloses a method for computing the absolute position from two rotary sensors making for example 9 and 11 turns over the absolute range, so that their angle difference goes twice from 0 to 2π over the range: the approximate position, scaled from said angle difference, repeats itself twice over the range. The first sensor's angle is then subtracted from the approximate position, yielding two staircase characteristics in each half-range with their steps offset from each other by half a step. This offset then indicates whether the correct position is located in the lower or upper half of the absolute range. Here again, the exact position is taken from the first encoder, with the second encoder used only to help find the approximate position.

Devices according to the invention could replace low-cost and small "LVDT" or "half bridge" inductive probes with linearity improved by electronic correction. They should thus have low-cost and small incremental sensors, for instance the inductive incremental sensors disclosed in US 7,015,687, hereby incorporated by reference in its entirety.

### SUMMARY OF THE INVENTION

It is an object of the invention to overcome or at least ameliorate shortcomings in prior art linear or rotary absolute position measuring devices or methods using first and second incremental position sensors.

Accordingly, there is disclosed here a method for computing an absolute position along a linear or curvilinear axis using first and second incremental position sensors of spatial period or pitch such that, N being an integer, N+0.5 pitches of the first sensor match a range of R along the axis and N-0.5 pitches of the second sensor match the same range of R along the axis;
computing from first and second incremental sensor's outputs, expressed in their respective pitch: an approximate absolute position, expressed in units of R/N, having an approximately linear characteristic versus said position, going from zero to N units over said range of R; an exact incremental position having a piece-wise linear or sawtooth characteristic, expressed in units of R/N, going repeatedly from zero to one unit over a range of R/N, or N times from 0 to one unit over a range of R; an exact absolute position expressed in units of R/N having said exact incremental position's fractional position closest to said approximate absolute position.

Combining both sensors' outputs to find the exact incremental position practically doubles the resolution, while still using the same simple multiplication by N as incremental sensors having N and N-1 (or N+1) pitches to get the approximate absolute position. A good choice for N, such as an integer power of two if binary arithmetic is used, makes it easier to compute an exact absolute position from both sensors' outputs.

Advantageously, computing an approximate absolute position within a reduced range of less than R, or half the full range of 2R, simply includes the steps of: subtracting the second incremental sensor's output from the first, taking the difference's fractional part and multiplying it by N. As shown in the description of the invention, the exact absolute position over a range of R can then be correctly determined if each sensor deviates from its ideal linear characteristic by less than its pitch divided by 4N.

For a larger range, or for measuring over a number of contiguous ranges, typically in the case of multi-turn rotary encoders having an absolute range of one turn, the full absolute range of 2R is needed. Computing a sufficiently accurate approximate absolute position over the full absolute range of 2R includes the additional steps of: subtracting said approximate absolute position from said first incremental sensor's output and taking its fractional part; subtracting said second incremental sensor's output from said approximate absolute position and taking its fractional part; taking the arithmetic mean and the difference of both fractional parts, and if said difference is less than -0.5 or more than +0.5, adding 0.5 units to said arithmetic mean, then taking its fractional part and multiplying it by 2N.

These additional steps allow the approximate absolute position to be unambiguously computed over the full range of 2R, as long as each sensor deviates from its ideal linear characteristic by less than its pitch divided by 8N, as shown in the description of the invention. or a linearity two times better than needed for the reduced range,

Independently of range, computing the exact incremental position optimally includes the steps of dividing the approximate absolute position by 2N; adding this quotient to said first incremental sensor's output or subtracting it from said second incremental sensor's output; taking either result's fractional part (as both are identical).

The resulting exact position characteristic going N times from 0 to 1 over a range of R has the sawtooth characteristic of a virtual incremental sensor having N pitches over that range. This is of advantage for computing an absolute position: the fewer pitches over the range, the less sensor accuracy needed for unambiguously determining the position. For comparison, if both sensors' outputs had simply been averaged, there would be 2N pitches over a range of R resulting in an unambiguous incremental range of only 0.5 units.

An advantage of having either a reduced range or a full range from the same position measuring device is that some popular instruments or gages have two executions: a standard lower cost higher volume one and an "upscale" higher cost smaller volume one having about twice the measuring span. For example 150 and 300 mm for calipers, 10 and 25 mm for digital dial indicators, and 4 and 10 mm for linear (pencil) probes: it then makes sense to use similar sensors, with the same reading head, but with tracks of different length, operating either in the reduced range with more relaxed accuracy specifications, or in the full range.

Advantageously, a device for an absolute position measurement along a linear axis of displacement comprises a first incremental sensor consisting of a first track parallel to said axis with spatially periodic features having a spatial period or pitch such that N+0.5 pitches match a range of R along said axis, N being an integer, and of a first reading head facing said first track, a second incremental sensor consisting of a second track parallel to said axis with spatially periodic features, having a spatial period or pitch such that N-0.5 pitches match the same range of R along said axis, and of a second reading head facing said second track, an essentially fixed or reference part or body including first and second reading heads, a movable part or probe including said first and second tracks aligned along said axis, moveable relatively to said body along said linear axis of displacement, linking means for powering said first and second reading heads and transmitting their output signals to means for computing an exact absolute position there from.

Such devices, whose sensors' outputs are already in digital format, could replace existing LVDT or half bridge inductive probes together with their analog-to-digital signal conditioning electronics.

Favorably, said first and second track are on opposed sides of, and about equidistant from, said axis of displacement, thereby reducing the effect of out-of axis or Abbé error.

Said linking means might advantageously include a single serial data transmitting link combining and transmitting both sensors' outputs, which on command or periodically might sample both sensor's position data simultaneously to minimize dynamic errors, then send them to external processing means, one after the other on the same link to minimize transmission hardware. An advantage of external processing means, besides reduced probe size, is that these could process a number of probes sharing common data-acquisition electronics.

It is also possible to include said means for computing an exact absolute position from both incremental sensors' outputs as additional hardware, e.g. in the form of a gate array, either inside the device's body, or at the end of its data link, for example in the connector to the processing means. Often, a dedicated microcontroller is already located in the connector shell for controlling data transfer and might as well be programmed to compute the absolute position, thus eliminating the need for additional hardware.

Optimally, said incremental sensors are inductive, making their tracks and reading heads easy to manufacture, for example as printed circuits. They are as insensitive to contaminants and as easy to shield from outside influences as prior art LVDT and "half-bridge" inductive probes. Their good linearity allows comparatively large pitches of the order of a millimeter and, with N equal to 8 or 16, a full range 2R around 16 or 32 mm. Being absolute, they may be powered only when needed, making them suitable for applications such as "dormant" devices in bridges or buildings, delivering a position output only when energized and interrogated via a wireless link by an external reader.

In a preferred inductive device, the tracks include flat multipolar windings having one pole per pitch along the axis of displacement, and the reading heads include flat sense and drive windings, the sense windings sharing one area facing the track and the drive windings sharing another area facing the track, as described in US 7,015,687 incorporated by reference in its entirety. Both inductive incremental sensors being easy to shield from each other, the tracks can be side-by-side or back-to-back on a common printed circuit, either thick enough to prevent crosstalk between tracks (if back-to-back), or shielded between tracks. With two such sensors, the device or measuring probe can be made small enough to fit in the standard 8 mm mounting diameters of standard LVDT or half bridge inductive probes.

### BRIEF DESCRIPTION OF THE DRAWING

FIG. 1 shows in principle two incremental sensors measuring the same position, according to the invention.
FIG. 2 shows the sensors' output characteristics and the characteristics computed from them.
FIG. 3 shows the sectional view along cut 3-3 of FIG. 4 of a preferred embodiment.
FIG. 4 shows a sectional view along cut 4-4 of FIG. 3 of the preferred embodiment.
FIG. 5 shows the preferred embodiment's tracks' and reading heads' windings side-by-side.

### DESCRIPTION OF THE INVENTION

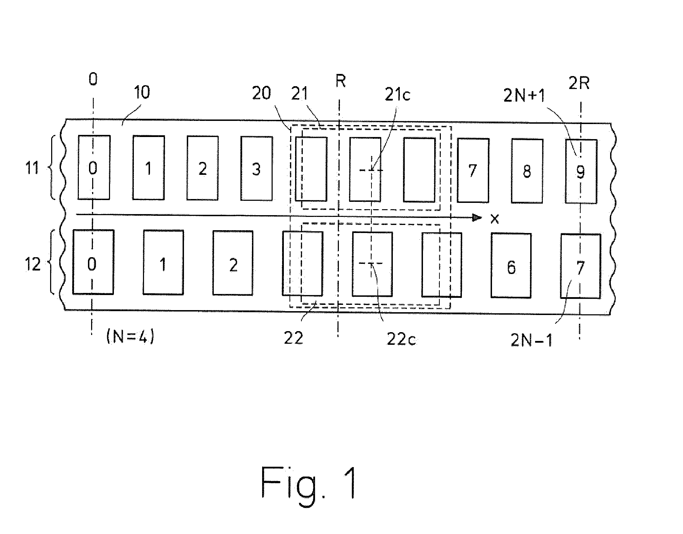

FIG.1 schematically outlines two incremental sensors laid out for measuring the same position along a measuring axis **x.** The first sensor track **11** and the second sensor track **12** are side by side on a common support **10.** The first sensor reading head **21** (outlined by a broken line) and the second sensor reading head **22** (outlined by a broken line) face respectively tracks **11** and **12.** Both reading heads are on a common mobile support **20** (outlined by a broken line), so their centers **21c, 22c** have essentially the same position along the axis **x.** Track **11** has a spatially periodic array of features (symbolically drawn as rectangles) numbered from 0 to 9 or 2N+1 while track **12** has a spatially periodic array of features, numbered from 0 to 7 or 2N-1, N being an integer equal to 4 here. Assuming binary arithmetic, preferred choices for N would be 8 or 16, a good compromise between absolute range and tolerance to sensor inaccuracy including some safety margin for better reliability.

An incremental sensor's spatial period or pitch is not necessarily realized by spatially periodic features on a scale or track: in interferometers for example, it results from light beam interferences instead. In such cases, the description still applies, with the tracks and features in FIG.1 merely symbolizing the sensor pitch.

The measuring axis' position 0 coincides with the centers of both tracks' features numbered 0, and the position 2R coincides with the centers of first track's feature 9 or 2N+1, and of second track's feature 7 or 2N-1, so that first sensor's 2N+1 pitches cover the same range 2R as the second sensor's 2N-1 pitches. The complete configuration repeats itself only every 2R, making it theoretically possible to measure an absolute position over that full range of 2R.

In other words, N+0.5 first sensor pitches match N-0.5 second sensor pitches over a reduced range of R. This definition is more convenient for two reasons. One being that measuring within the reduced range of R is a desirable option, being simpler and less demanding on sensor linearity (as explained later); or conversely, for a given linearity, offering a better safety margin or redundancy. The other being easier comparison with previously disclosed "N, N+1" or "N, N-1" configurations: for the same integer N and similar pitches, their range is also near R and their tolerance to sensor inaccuracy about the same. However, extension to the full range of 2R is only possible with the "N+0.5/N-0.5" arrangement proposed here.

The fractional part of a number is commonly understood as the number minus its floor function, i.e. the closest equal or more negative integer. Accordingly, the fractional part of 2.3 is 0.3, and for -2.3 it is +0.7 (not -0.3) as its floor function is -3 (not -2). This definition is consistently used here. The fractional part of a number Z is written between braces: {Z}.

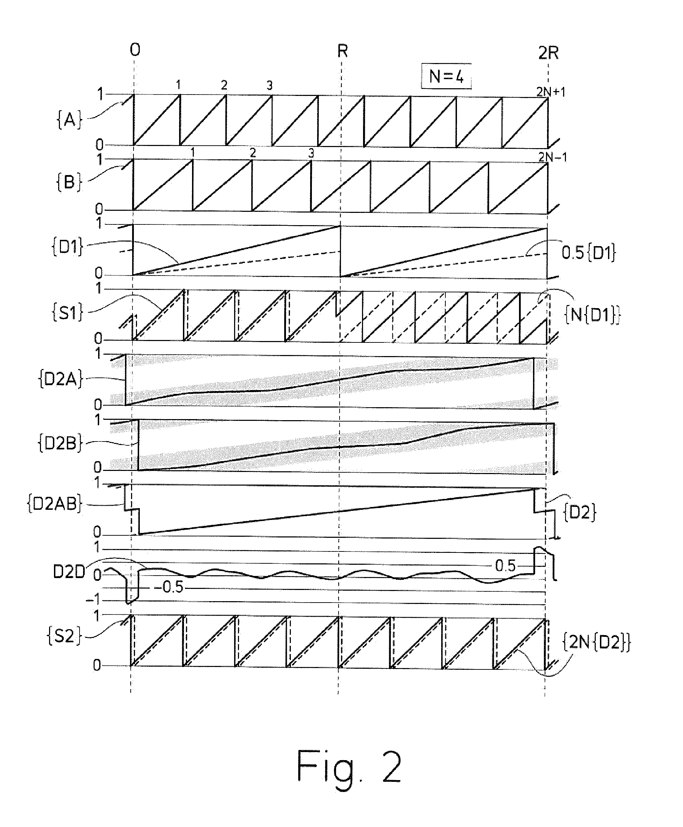

FIG.2 shows measured and calculated characteristics as a function of position over a range of 2R along axis **x,** and marked at positions 0, R, 2R. The top two characteristics are the fractional parts {A}, {B} of first and second incremental sensors' outputs A, B (not shown), expressed in their respective spatial period or pitch, so that the fractional part of output A or B is actually the fractional part of first or second incremental sensor's respective pitch. The fractional parts {A}, {B} of incremental sensors' outputs A, B, expressed in their respective pitches as a function of position along the measuring axis x, go linearly from zero to one at every respective pitch, resulting in unit height sawtooth characteristics having respectively 2N+1 and 2N-1 pitches over the full range of 2R.

The description bases on the spatial phase relation shown in FIG.2 between the sawtooth characteristics of the sensor outputs' fractional parts {A} and {B}, both being near 0 or 1 at a common position, defined as position 0 in FIG.2, which could even be a virtual position outside the actual measuring span. It is easy to correct a mechanical position mismatch between both sensors' tracks to get said specific spatial phase relation, as it is always possible to add a stored offset to at least one sensor's output, shifting its fractional output part, to restore said specific phase relation. It is thus enough to describe the measuring method based on this specific spatial phase relation, as all other possible phase relations can be reduced to this one by a simple physical or arithmetic sensor output shift.

The next characteristic shown in FIG.2 is the fractional part of the difference {D1} obtained by subtracting the second output B or its fractional part {B} from the first output A or its fractional part {A} and taking the difference's fractional part. As the outputs are expressed in units corresponding to pitches, the fractional part of the difference {D1} goes approximately linearly from 0 (both outputs being at 0) near position 0 to 1 (equal to N+0.5 minus N-0.5) near position R, then jumping to 0, and returning to 1 near position 2R: the characteristic is a sawtooth of unit height with a pitch of R. The exact positions of its discontinuities are where both outputs' fractional parts {A} and {B} are equal, that is, near position 0 or 2R where both are near 0 or 1, and near position R where both are near 0.5. This fractional part of the difference {D1}, multiplied or scaled by N yields N{D1} (not shown), the approximate absolute position in the reduced range of R, expressed in units of R/N. It goes approximately linearly from 0 to R over the range of R, and again from 0 to R over the next range of R, that is, once between positions 0 and R and once between positions R and 2R.

The exact incremental position {S1} can be found by taking one half of the fractional part of the difference {D1}, that is, 0.5{D1}, its characteristic drawn in dotted lines, equal to the approximate absolute position N{D1} divided by 2N; then subtracting 0.5 {D1} from sensor output A or its fractional part {A} and taking the difference's fractional part. This same position {S1} can also be found by adding 0.5{D1} to sensor output B or its fractional part {B} and taking the sum's fractional part. The resulting exact incremental position {S1} has a sawtooth characteristic of unit height and with N pitches in the reduced range R. There is a discontinuity of height 0.5 at each end of the reduced range of R, that is, at positions 0, R, 2R, because of the discontinuity of half of the fractional part of the difference 0.5{D1} at the same positions. These discontinuities are not relevant as long as the measuring range between positions 0 and R does not include them.

Another way to compute from both sensors' outputs said exact incremental position in a reduced absolute range of less than R, going N times from 0 to 1 over a range of R, consists in taking the average and the difference of both outputs' fractional parts, adding 0.5 to the average if the difference is negative, then taking the fractional part. The result is the same.

The exact absolute position (not shown), going linearly from 0 near position 0 to R near position R, can be found by taking the fractional part of approximate absolute position N{D1}, that is, {N{D1}} (its characteristic drawn in dotted line in FIG.2) and fitting it to the closest incremental position {S1}. The exact incremental positions of same value being spaced apart by its pitch, equal to R/N, the closest position cannot be more than 0.5 units or pitches away. This would be the worst case, with the approximate absolute position falling between two equally likely "exact" positions. The approximate absolute position's maximum deviation should thus be less than 0.5 units from the exact incremental one. Calculated from the difference between both sensors' outputs and scaled by a factor N, and assuming both sensors have about the same position error, the approximate absolute position has N times the sum of both sensors' error: consequently, each sensor's error has to be less than 0.5 pitches divided by 2N. For example, if N equals eight, each sensor's maximum position error should be less than 1/32nd of its pitch.

The exact absolute position in an absolute range of less than R is the position having a fractional part equal to the exact incremental position {S1} and closest to the fractional part of the approximate absolute position, here {N{D1}}: the exact incremental position becomes the exact absolute position's fractional part, and the approximate absolute position's becomes its integer part, adjusted, if necessary, by one unit up or down to get the position closest to the approximate absolute position. For example, with an approximate absolute position of 7.3 and an exact incremental position of 0.1, the closest exact absolute position would be 7.1 (no integer part adjustment); with an approximate absolute position of 7.1 and an exact incremental position of 0.9, the closest exact absolute position would be 6.9 (integer part adjusted one unit downwards).

Taking into account that a valid difference between both can only be between -0.5 and +0.5, the following step-by-step procedure does it arithmetically:
- subtracting the fractional part of the approximate absolute position {N{D1}} from the exact incremental position {S1};
- adding 0.5;
- taking the fractional part;
- subtracting 0.5; the result is the difference of both positions;
- adding the result to the approximate absolute position to get the exact absolute position.

An alternative step-by-step procedure, below, is shorter but uses conditional instructions:
- subtracting the fractional part of the approximate absolute position's fractional part {N{D1}} from the exact incremental position {S1};
- adding 1 if the difference is less than -0.5 or subtracting 1 if it is more than +0.5; the result is the difference of both positions;
- adding the result to the approximate absolute position to get the exact absolute position.

It may be desirable to narrow both positions' difference range, say to between-0.25 and +0.25 and use the remaining values between -0.5 and +0.5 to detect an error. This works as long as the measuring span stays inside limit positions 0 and R. However, outside this range the exact incremental position is off by 0.5 units as mentioned before and shown in FIG.2. In other words, the difference between closest approximate and exact positions is nearer to 0.5 than to 0. For a measuring span larger than a range of R, that is, crossing either limit position 0 or R, the positions' difference range is thus less than 0.25 for a position between 0 and R, and more than 0.25 for a position between R and 2R.

Absolute measuring can be expanded to the full range of 2R by additionally checking whether the difference between fractional part of approximate absolute position {N{D1} and exact incremental position {S1} is closer to 0.5 than to 0, and if so, shifting exact incremental position {S1} by 0.5 units, re-computing the exact incremental position, then adding R, as the position is between R and 2R in this case. Computing might thus take longer between R and 2R than between 0 and R, which might be less desirable for tracking a movement. It can be seen, though, that to correctly detect the position's half range, the maximum sensor deviation must be less than 0.25 units divided by 2N.

A more straightforward way to find the exact absolute position over the full range of 2R starts by computing first a sufficiently accurate approximate absolute position over that full range, for example by the following steps or their arithmetic equivalent:
(i) subtracting the previously calculated approximate absolute position N{D1} or its fractional part {N{D1}} from the first sensor's output A or its fractional part {A}, and taking the difference's fractional part, resulting in a function {D2A}, whose characteristic, shown in FIG.2, goes roughly from 0 near position 0 to 1 near position 2R;
(ii) subtracting the second sensor's output B or its fractional part {B} from the previously calculated approximate absolute position N{D1} or its fractional part {N{D1}}, and taking the difference's fractional part, resulting in a function {D2B}, whose characteristic, shown in FIG.2, also goes roughly from 0 near position 0 to 1 near position 2R;
(iii) finding the arithmetic mean D2AB of both functions {D2A} and {D2B};
(iv) subtracting function {D2B} from {D2A}, or vice-versa, to get their difference D2D;
(v) if the absolute value of difference D2D is over 0.5, adding 0.5 to arithmetic mean D2AB to find the corrected mean D2 (if not, D2 stays equal to D2AB);
(vi) taking D2's fractional part {D2} (dotted line), as it will be needed to find the exact incremental position over the full range of 2R;
(vii) multiplying fractional part {D2} by 2N to get the approximate absolute position 2N{D2}, not shown as it is just a scaled-up version of {D2} going from 0 near position 0 to 2N near position 2R.

Function {D2} is used instead of the simpler functions {D2A} or {D2B} as these would be too inaccurate for finding the correct absolute position: the approximate absolute position N{D1} in functions {D2A} or {D2B} would contribute an error of N times one sensor's error, multiplied again by 2N in step (vii). As the fractional part {D2} is derived from the arithmetic mean of functions {D2A} and {D2B}, the error due to N{D1} once added and once subtracted cancels out, and only the arithmetic mean of both sensor errors remains after step (iii). The error after step (vii) is thus reduced to the arithmetic mean of both sensor errors multiplied by 2N. The permissible deviation ranges or error bands of functions {D2A} and {D2B} when using function {D2} are shown as shaded areas in FIG.2. These are not only straddling the characteristics shown but also the ones shifted by one unit, as seen in the upper left and lower right corners, simply because of the fractional part nature of these functions, whose integer parts may have any value. It can be seen that the maximum permissible deviation of functions {D2A} and {D2B} is 0.25 units, to make sure that the gap between shaded areas remains above 0.5 units. Otherwise, the abovementioned correction step (v) gets corrupted as the arithmetic mean's checking (iv) and correcting (v) steps become ambiguous.

As the error gets multiplied by 2N in step (vii), it follows that the maximum tolerable error per sensor is also 0.25 units or pitches divided by 2N, and this for the full absolute range of 2R. The sensor's accuracy limit is thus narrowed by a factor of two as compared to the reduced range's accuracy limit of 0.5 units divided by 2N disclosed before. Taking the same example already used for the reduced range of R, with N equal to eight, each sensor's maximum position error, measuring over the full range of 2R, should be less than 0.25 pitches divided by 2N, or about 1/64th of its pitch.

The exact incremental position {S2}, valid over the full absolute range of 2R, to the contrary of exact incremental position {S1}, valid over a reduced range only, can be found by taking the fractional part of the approximate absolute position divided by 2N, that is, function {D2}, subtracting it from first sensor output A or its fractional part {A} and taking the difference's fractional part; or equivalently, it can also be found by adding function {D2} to second sensor output B or its fractional part {B} and taking the sum's fractional part. Like the previously described exact incremental position {S1}, the resulting exact incremental position {S2} has a sawtooth characteristic of unit height with N pitches over a range R. However, there are no discontinuities of value 0.5 anymore near positions 0, R, 2R, making the exact incremental position's range unlimited, even though the exact absolute position stays unambiguous within a range of 2R only. This may be particularly useful for a rotary encoder having a full absolute range of 2R equal to one turn, its unlimited incremental range allowing it to track and thus count the number of turns made. Of course, additional absolute coding means may be added for angles higher than one turn, say in a steering wheel, but also in such a case the seamless transition from one full turn range to the next given by the full absolute range of 2R simplifies the design.

The exact absolute position (not shown), going linearly from 0 near position 0 to 2R near position 2R, can be found by taking the fractional part of the approximate absolute position, that is, {2N{D2}} (its characteristic drawn in dotted line in FIG.2) and adjusting it to the closest incremental position {S2}. Just as for the reduced range, the full range's approximate absolute position's maximum deviation must be less than 0.5 units. This is the case here anyway: the sum of both sensors' deviations multiplied by N must be less than 0.25 units to find the correct approximate absolute position {2N{D2}}.

Like in the reduced range case, the exact absolute position over the full range is the position having a fractional part equal to the exact incremental position, here {S2}, closest to the fractional part of the approximate absolute position, here {2N{D2}}. For this, the exact incremental position becomes the exact absolute position's fractional part, and then the approximate absolute position's integer part is taken and adjusted, if necessary, by one unit up or down to get the position closest to the approximate absolute position. For example, with an approximate absolute position of 7.1 and an exact incremental position of 0.3, the closest exact absolute position is 7.3 (no integer part adjustment); with an approximate absolute position of 7.9 and an exact incremental position of 0.1, the closest exact absolute position is 8.1 (integer part adjusted one unit upwards).

This is a simple operation, taking in account the fact that a valid difference between both has to be between -0.5 and +0.5. The following step-by-step procedure does it arithmetically:
- subtracting the fractional part of the approximate absolute position's fractional part {2N{D2}} from the exact incremental position {S2};
- adding 0.5;
- taking the fractional part;
- subtracting 0.5; the result is the difference of both positions;
- adding the result to the approximate absolute position to get the exact absolute position.

The procedure below is shorter but uses branching instructions:
- subtracting the fractional part of the approximate absolute position {2N{D2}} from the exact incremental position {S2};
- adding 1 if the difference is less than -0.5, or subtracting 1 if it is more than +0.5; the result is the difference of both positions;
- adding the result to the approximate absolute position to get the exact absolute position.

Some popular instruments or gages may use either the reduced or the full range, as they come in two versions, a standard lower cost higher volume one and a higher cost lower volume one having about twice the measuring span. For example 150 and 300 mm for calipers, 10 and 25 mm for digital dial indicators, and 4 and 10 mm for linear (pencil) probes. In such cases it might be optimal to use similar sensors (e.g. same reading heads with longer or shorter tracks) which can operate either in the reduced range with more relaxed accuracy specifications suiting their lower manufacturing costs, or in the full range, where costs matter less, with more exacting specifications.

With all devices and methods described here, it is possible to improve accuracy by comparing both sensors: one way to measure and thus correct both sensors' spatially periodic errors is by measuring the sensor with the shorter pitch at all positions an integer number of pitches apart on the sensor with the longer pitch, yielding 2N-1 fractional positions spread over one pitch of the sensor with the shorter pitch, allowing its periodic error to be found, then repeating this with the sensors exchanged and finding 2N+1 positions spread over one pitch of the sensor with the longer pitch. Variants including more iterations and/or mathematical analysis may be more accurate but may also take longer. Of course, long-range errors due to the scales can only be measured with an external reference, and if enough measurements are made, the spatially periodic error can also be taken care of, either by a point-by-point correction over the whole range or by measuring or calculating each sensor's periodic error contribution. In all above cases, the error values thus found are then used for correction.

### DESCRIPTION OF THE PREFERRED EMBODIMENT

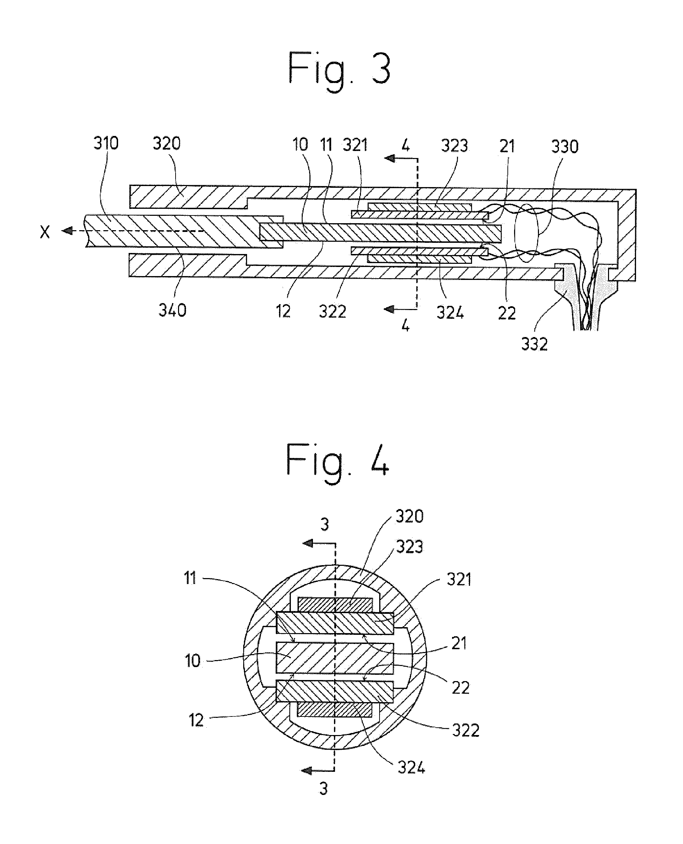

The preferred embodiment is a gauge for an absolute position measurement along a linear axis of displacement, using first and second incremental sensors, each consisting of a first respectively second track and a first respectively second reading head. FIG.3 is a sectional view of the gauge along its longitudinal axis, identical with the axis of displacement **x.** The locations of first track **11** and of second track **12** are on opposite sides of a common support **10,** attached to a cylindrical rod **310.** Together, scales **11, 12,** common support **10** and rod **310** form the linear gauge's mobile part or probe, moveable along an axis of displacement **x** relatively to a fixed part. The fixed part consists of a cylindrical body **320** and, attached thereto, both first and second printed circuit boards **321, 322,** first and second reading heads **21, 22** forming a part thereof, and located on the board's side facing their respective track **11,12.** Reading heads **21, 22** are respectively connected to electronics **323, 324** located on the opposite side of their respective printed circuit boards **321, 322.** Tracks **11, 12** are on the mobile part. As a remark, the fixed part, i.e. the tracks, and the mobile part, i.e. the reading heads, of FIG.1 have been exchanged in FIG.3 for convenience, as it is easier here to have fixed reading heads, because of their connections. The relative movement of mobile and fixed parts along the axis of displacement **x** is enabled by the linear bearing **340** between body **320** and rod **310.** There are also guiding means for preventing a rotation around the axis of displacement **x,** not shown here, as adequate solutions are well known in the art: a common solution is a pin on the mobile part sliding in a groove on the fixed part; a known alternative solution consists in sliding elements such as sapphire or Teflon beads on or near the reading heads guiding the scale. Electronics **323, 324** are connected to external equipment by data- and power-linking means, here connecting wires **330,** through cable sheath **332.** The cross-sectional view in FIG.4 shows the location of the reading heads **21, 22** facing tracks **11, 12** of the relatively movable support **10.** Printed circuit boards **321, 322** are attached to body **320** which has the proper cavities for lodging said printed circuit boards **321, 322**and their electronics **323, 324.**

The very compact linear gauge, with an external diameter as small as 8 mm, has incremental inductive sensors of the type disclosed in US 7,015,687, incorporated herein by reference in its entirety. However, instead of drive and sense windings being side-by-side as shown in the '687 patent's drawing, they follow each other along a track consisting of a closed zigzag flat coil, as suggested in the specification, col. 4 lines 13-16: "Alternately, if the track is made by a conductor in the shape of a closed zigzag, both groups may follow each other along the measuring axis".

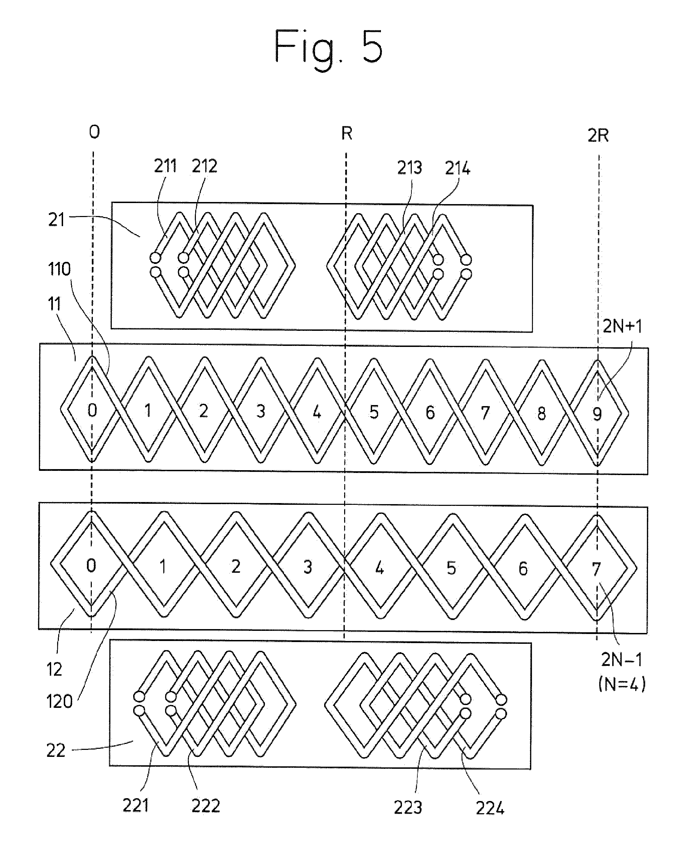

FIG.5 accordingly shows both reading heads' and both tracks' flat multi-polar zigzag windings, their extension marked by 0, R, 2R, schematically drawn side-by-side here for clarity. All flat windings use two metal layers: at crossovers the bottom layer is shown hidden by the top layer. First reading head **21** (top) has interlaced drive windings **211, 212** and interlaced sense windings **213, 214** of same pitch as closed winding **110** of first track **11.** Second reading head **22** (bottom) has interlaced drive windings **221, 222** and interlaced sense windings **223, 224** of same pitch as closed winding **120** of second track **12.** Each drive or sense winding consists of a conductor with its two terminals connected through to the electronics **323, 324** (hidden from view here) on the back of its printed circuit board **321** or **322.** In this winding configuration, drive and sense windings follow each other along their tracks **11** or **12,** so that their common support **10** as well as the printed circuit boards **321, 322** with reading heads **21, 22** can be made narrow enough to fit in the gauge's body **320** as shown in FIG.4. What is novel here is combining two such prior art incremental sensors of slightly different pitch so that N+0.5 first sensor pitches match N-0.5 second sensor pitches over a range of R. As disclosed in the '687 patent, one spatial period or pitch corresponds to half a zigzag of the flat winding along the measuring axis, or in other words to one single magnetic pole of the winding (there are two magnetic poles, that is, two contra-rotating current loops per zigzag). N being 4 by way of example here, 2N+1 or 9 pole-to-pole pitches of winding **110** of first track **11** match 2N-1 or 7 pole-to-pole pitches of winding **120** of second track **12.** Both tracks have a length of 2R here by way of example, which only allows a small travel, as each reading head detects position accurately only as long as its windings fully face the scale winding. In a practical case, both tracks would have to be significantly longer than the reading heads to accommodate longer travel: if the reading head had an extension of 2R, the tracks' length should be at least 4R for measuring a range of 2R.

The operation of each incremental sensor is disclosed in the '687 patent. Basically, the sensor's output, derived from the coupling from drive to sense windings via the track winding, is a linear function of the relative position of scale and reading head. When operating in close proximity, cross-coupling between both sensors must of course be minimized. This can be done either by a metal plane (not shown here) in the common support **10** located between first track **11** and second track **12** in the common support **10.** Or simply by spacing both tracks sufficiently apart, taking advantage of the exponential attenuation of multipolar fields over distance: with scales about one pole-to-pole pitch or R/N apart, the attenuation factor is nearly one thousand. Additionally, each scale partially screens its reading head from the other scale, further reducing cross-coupling. Reading head windings of sufficient length also reduce cross-coupling between windings of different pitch because of their mismatch with the remote scale (the one they shouldn't work with). And finally, scale-to-scale coupling can be minimized by making the scale length equal to a length of 2R or a multiple thereof.

Scale windings may also have other geometries, as long as they are multipolar. In particular, the top layer (closest to the reading head) keeps its zigzag shape, but the buried layer consists of one or more straight conductors, whose extremities are connected to those of the top layer zigzag. This increases coupling between scale and reading head by reducing their effective gap, as only the top layer remains a coupling element. It is also possible to have a simple one layer back-and-forth zigzag winding. In both cases, the shorter scale conductor length also reduces unwanted transmission line effects.

The axis of displacement x is located between first track **11** and second track **12,** minimizing the effect of scale misalignment (also called Abbe error) by creating opposed measurement errors in each sensor: these cancel out in the exact position, based on their average. There is a limit, though, as these errors add up and are magnified in the approximate position, which is based on their difference. For instance with both tracks typically about one pitch apart, a gross misalignment of 1%, i.e. an angular error of 0.01 radian, would result in a difference of 0.01 times N pitches between exact and approximate positions. To find the correct position over the full range said difference should be less than 0.25 pitches, so that N should stay under 25 here.

Each sensor's output, expressed in its respective pitch, is delivered by its electronic circuit as a digital signal whose fractional part has the previously described sawtooth characteristic of position {A} or {B} shown in FIG.2. These digital signals are transmitted through linking means, here connecting wires **330** shown in FIG.3, also used for powering the sensors' electronic circuits from an outside power source. To reduce the number of connections, both sensors have a serial data output, whose timing allows them to be combined as a single serial output: when data is externally requested, both sensors store their position, and the first sensor sends its serial data, followed by the second sensor. A gate combines both serial data streams into a single one. Only four connections are needed, one for the external data request, another for the combined serial data output, and two for the power supply; or five, if a synchronizing clock is added to read data. Connecting wires **330** connect both electronics to external means (not shown) computing an exact absolute position from both incremental sensors' outputs. One possible embodiment of said external means could be embedded in a microcontroller located in the connector at the far end of wiring **325** and handling the interface protocol, for example for a standard USB interface. Another possibility would be to include this microcontroller in the gauge, making the absolute position available directly from the gauge. Independently of these possibilities, a wireless link may replace the wires: as the gauge's power needs are very low, power could also be supplied wirelessly from outside.

A matchbox-shaped casing might be preferable to a cylindrical one for longer travel devices: it would then be better and simpler to have wider tracks and reading heads with sense and drive windings side-by-side, instead of following each other, as disclosed at length in the '687 patent. The above-described scales consisting in a closed zigzag flat coil can then be advantageously replaced by scales consisting in a ladder shaped conductor with contiguous loops influencing each other only slightly, better for coupling signals across the measuring axis rather then along it. The main advantages are a constant coupling factor regardless of scale length, and insensitivity to signals picked up from the part of the scales not facing the reading heads, which might be of interest for non-shielded applications (in the embodiment shown in FIG. 3, the sensors are shielded by the gauge's body).

As mentioned in the "field of invention", the invention may also be applied to embodiments with curvilinear tracks, in particular rotary encoders. For a 180° or half-turn absolute range, both coil or ladder tracks may be implemented, but for a 360°or full turn absolute range, ladder shaped tracks are mandatory. The reason for this is that for one full turn range both tracks have an odd number of pitches over one turn, one track having 2N-1 and the other 2N+1 pitches: this cannot be realized by closed coil tracks (coupling along the circumference), which have an even number of poles, in other words as many south poles as north poles. However, just as for the preferred linear embodiment, rotary embodiments of the invention offer a unique combination of high resolution and large absolute range.

## Claims

1. A method for computing an absolute position along a linear or curvilinear path using first and second incremental position sensors of spatial period or pitch such that, N being an integer, N+0.5 pitches of the first sensor match a range of R along the path and N-0.5 pitches of the second sensor match the same range of R along the path;
computing from first and second incremental sensor's outputs, expressed in their respective pitch:
an approximate absolute position, expressed in units of R/N, having an approximately linear characteristic versus said position, going from zero to N units over said range of R;
an exact incremental position having a piece-wise linear or sawtooth characteristic, expressed in units of R/N, going repeatedly from zero to one unit over a range of R/N, or N times from 0 to one unit over a range of R;
an exact absolute position expressed in units of R/N having said exact incremental position's fractional part and closest to said approximate absolute position;
thereby obtaining an exact absolute position of better resolution than either sensor's output.

2. The method of claim 1, wherein computing the approximate absolute position in a range of R includes the steps of:
subtracting the output of the second incremental sensor from the output of the first incremental sensor, taking the difference's fractional part and multiplying it by N.

3. The method of claim 2, wherein computing an approximate absolute position in a range of 2R includes the additional steps of:
subtracting said approximate absolute position from said first incremental sensor's output and
taking its fractional part;
subtracting said second incremental sensor's output from said approximate absolute position and taking its fractional part;
taking the arithmetic mean of said fractional parts,
subtracting said fractional parts and, if the difference is less than -0.5 or more than +0.5,
adding 0.5 units to the approximate absolute position, taking the result's fractional part and
multiplying it by 2N.

4. The method of claim 1, wherein computing said exact incremental position includes the steps of:
dividing said approximate absolute position by 2N to find the quotient;
adding said quotient to said first incremental sensor's output or subtracting said quotient from said second incremental sensor's output;
taking either result's fractional part;
thereby achieving a resolution of approximately half of either sensor's resolution over the absolute range.

5. A device for an absolute position measurement along a linear axis of displacement, comprising:
a first incremental sensor consisting of a first track parallel to said axis with spatially periodic features having a spatial period or pitch such that N+0.5 pitches match a range R along said axis, N being an integer, and of a first reading head facing said first track,
a second incremental sensor consisting of a second track parallel to said axis with spatially periodic features, having a spatial period or pitch such that N-0.5 pitches match the same range R along said axis, and of a second reading head facing said second track,
an essentially fixed part or body including both first and second reading heads,
a movable part or probe including said first and second tracks aligned along said path,
moveable relatively to said body along said linear axis of displacement,
linking means for powering said first and second reading heads and transmitting their output signals to means for computing an exact absolute position there from.

6. The device of claim 5, wherein said first and second track are on opposed sides of and about equidistant from said axis of displacement.

7. The device of claim 5, wherein said linking means include a single serial data transmitting link combining and transmitting both sensors' outputs.

8. The device of claim 5, further including means for computing an exact absolute position from both incremental sensors' outputs.

9. The device of claim 5, wherein said incremental sensors are inductive, the tracks including flat multipolar windings having one pole per pitch along the axis of displacement, and each reading head, facing its respective track, including flat sense and drive windings, the sense windings sharing one area, drive windings sharing another, distinct, area.
